# FASCICULE DE BREVET EUROPEEN

(11) **EP 3 700 842 B1**
(45) Date de publication et mention de la délivrance du brevet: **03.11.2021**
(21) Numéro de dépôt: 18808428.9
(22) Date de dépôt: 24.10.2018
(51) Int. Cl.: B65G 15/42, A47J 37/04, B65G 15/58, B65G 15/34, B65G 15/54

(54) **CONVOYEUR POUR PASSER DES PRODUITS DANS UN FOUR MICRO-ONDES**
FÖRDERER ZUM TRANSPORTIEREN VON PRODUKTEN IN EINEN MIKROWELLENOFEN
CONVEYOR FOR PASSING PRODUCTS INTO A MICROWAVE OVEN

(30) Priorité: 27.10.2017 FR 1760129
(43) Date de publication de la demande: 02.09.2020
(73) Titulaire: NBread-Process, 41700 Le Controis en Sologne (FR)
(72) Inventeur: PAURD, Olivier, 41000 Blois (FR)
(74) Mandataire: Plasseraud IP
(86) Numéro de dépôt international: PCT/FR2018/052644
(87) Numéro de publication internationale: WO 2019/081852

(56) Documents cités:
- WO-A1-2012/172450
- GB-A- 1 235 046
- US-A- 3 974 353
- US-A- 4 705 161
- US-A1- 2005 258 019
- Floriano Jf ET AL: "Biocompatibility studies of natural rubber latex from different tree clones and collection methods. - PubMed - NCBI", , 8 novembre 2013 (2013-11-08), XP055551250, Extrait de l'Internet: URL:https://www.ncbi.nlm.nih.gov/pubmed/24 202915 [extrait le 2019-02-04]

## Description

### DOMAINE ET CONTEXTE DE L'INVENTION

La présente invention concerne les dispositifs de convoyage pour passer des produits dans un four micro-ondes. Les produits en question sont typiquement des produits alimentaires ou alicamentaires pour humains ou animaux, que l'on veut cuire ou simplement réchauffer. La bande convoyeuse du convoyeur est soumis à diverses contraintes mécaniques et thermiques, notamment en raison de l'entraînement par des rouleaux entraîneurs et de la température régnant à l'intérieur du four micro-ondes.

Un exemple de tel système est connu du document US7183527. Toutefois, il est nécessaire d'utiliser des réceptacles pour contenir le produit, et par ailleurs certains éléments métalliques de calage monté sur la bande convoyeuse ont tendance à modifier le champ des ondes micro-ondes, de manière pas toujours prévisible.

Par ailleurs, la demanderesse est titulaire d'une demande de brevet WO2016110513 qui divulgue un nouveau procédé de fabrication d'un produit alvéolaire qui contient une molécule de structure qui est figée par une élévation de température contrôlée ; cette élévation de température, appliquée sur un produit liquide pâteux afin de le rendre spongieux ou quasi-solide, est obtenue par le passage dans un four à micro-ondes, ce qui fige la texture du produit. La demanderesse a constaté qu'aucune des solutions connues de l'art antérieur n'était optimisée pour cet usage.

Des exemples et des modes de réalisation de l'art antérieur sont présentés dans le document US2005/258018 A1, le document GB 1 235 046 A, le document WO 2012/172450 A1, le document US 4 705 161 A, et le document « Biocompatibility studies of natural rubber latex from différent tree clones and collection methods » (Floriano et Al). Le document US 3 974 353 A divulgue un convoyeur sans fin selon le préambule de la revendication 1.

Par conséquent, il subsiste un besoin de proposer une solution optimisée pour recevoir sur un convoyeur sans fin un produit pâteux voire liquide afin de le faire passer dans un four à micro-ondes en vue de figer sa texture par l'activation de la structure de la molécule de structure qui est incluse dans ledit produit, et de figer la structure du produit.

### BREF EXPOSE DE L'INVENTION

À cet effet, il est proposé ici un convoyeur (1) sans fin comprenant une bande convoyeuse (2) entraînée et guidée par des rouleaux, et comprenant un ou plusieurs moules de réception (3) de produit sous forme liquide ou pâteuse, selon la revendication 1.

Grâce à ces dispositions, la forme du produit est donnée et conservée par le ou les moules de réception, et le passage aux micro-ondes réchauffe de manière homogène le ou les des produits contenus dans le ou les moules. De plus, la position du ou des moules est parfaitement définie sur la bande convoyeuse de sorte qu'après un tour complet, il n'y a pas de décalage du moule par rapport à la bande convoyeuse. De plus, avantageusement, le produit est déposé par un équipement de dépose directement dans le ou les moules et est déchargé, après le passage au micro-ondes, sur un autre convoyeur en aval, sans qu'il y ait besoin de faire appel à des réceptacles séparés complémentaires.

Par conséquent, le processus décrit dans la demande de brevet WO2016110513 peut être ainsi optimisé. Le présent procédé peut naturellement être utilisé dans un contexte différent de celui de la demande de brevet WO2016110513.

En effet, le produit déposé dans les moules de réception du convoyeur peut être un produit alimentaire ou un produit non alimentaire. La principale utilisation prévue concerne les produits alimentaires au sens large. Mais il n'est pas exclu d'utiliser le procédé et le convoyeur pour des produits comprenant des matières plastiques, des matières issues de recyclage, des matières hybrides comprenant à la fois des résidus alimentaires et non alimentaire.

Dans divers modes de réalisation de l'invention, on peut éventuellement avoir recours en outre à l'une et/ou à l'autre des dispositions suivantes.

Selon une option, la bande convoyeuse se présente comme une bande maillée ajourée. Moyennant quoi, on obtient une bonne légèreté et une flexibilité dans la direction transversale au plan de la bande.

Selon une option, la bande convoyeuse est formée en matière polymère renforcée de fibres de verre ou de fibre de téflon™. Moyennant quoi, on obtient une bonne rigidité en traction dans le plan de la bande, et une bonne transparence aux micro-ondes.

Selon une option, le ou les moules de réception sont formés en matière élastomère. Moyennant quoi, on obtient une bonne flexibilité et une faible adhérence pour favoriser un bon démoulage ; la flexibilité est aussi mise à profit pour les zones de retournement de la bande convoyeuse.

Selon une option, le ou les moules de réception sont formés en matière silicone.

Selon une option, la fixation entre moules et bande convoyeuse est réalisée par apport de colle en matière identique ou similaire à la matière du moule, à savoir une matière silicone ou élastomère biocompatible. Moyennant quoi, on obtient une bonne adhérence au vu la compatibilité des matières, la bande convoyeuse est prise en sandwich entre deux zones de matériau silicone.

Selon une option, il est prévu l'utilisation d'une contrepartie (8) placée du côté opposé de la bande convoyeuse par rapport au moule, la contrepartie étant formée en silicone ou élastomère biocompatible, et la contrepartie étant fixée par ledit apport de colle. Moyennant quoi, cette solution est très performante en robustesse mécanique.

Selon une option, il est prévu une pluralité de moules discrets, présentant une forme évasée en s'éloignant de la bande convoyeuse pour permettre un démoulage aisé. Ceci convient pour une production de produits individuels.

Selon une option, il est prévu un moule unique de longueur substantiellement égale à la longueur de la bande convoyeuse. Ceci convient pour une production continue de produits à découper par la suite ; de préférence, on choisit un Silicone avec une flexibilité suffisante pour autoriser la déformation subie dans les zones de retournement de la bande convoyeuse.

Le moule unique peut se présenter comme une goulotte à parois sensiblement perpendiculaire au fond. En alternative, la section du moule unique peut présenter un profil à forme évasée en s'éloignant de la bande convoyeuse. Ceci facilite le démoulage en sortie de convoyeur.

Selon une option, il est prévu que deux extrémités de la bande convoyeuse soient raboutées au moyen d'une clavette pour former une bande continue. La bande convoyeuse sans fin est obtenue simplement ; la clavette peut être en plastique rigide tel que ABS, PVC ou autre.

Selon une option, il est prévu que deux extrémités du moule unique soient raboutées pour former un moule continu.

L'invention vise aussi une chaîne de préparation d'un produit alimentaire ou non alimentaire comprenant un convoyeur tél que décri précédemment.

### EXPOSE DES FIGURES

D'autres aspects, buts et avantages de l'invention apparaîtront à la lecture de la description suivante de plusieurs de ses modes de réalisation, donnés à titre d'exemples non limitatifs. L'invention sera également mieux comprise en regard des dessins joints sur lesquels :
- la figure 1 est une vue schématique en coupe d'un système de production de produits alimentaires, le système comprenant un convoyeur sans fin selon un premier mode de réalisation de l'invention,
- la figure 2 est une vue de dessus du convoyeur de la figure 1, avec des moules discrets,
- la figure 3 est une vue en coupe illustrant la fixation du moule par rapport à la bande convoyeuse,

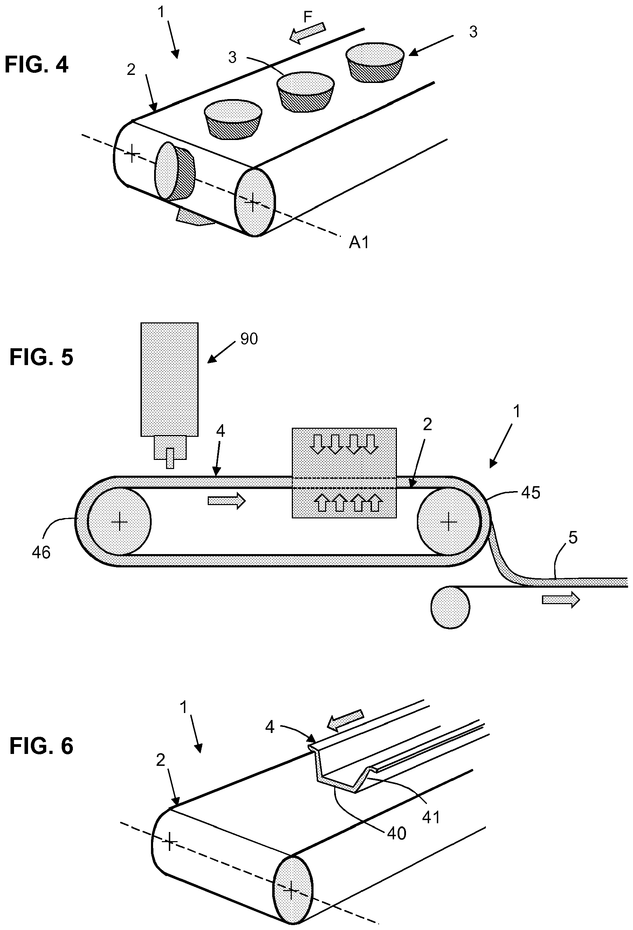

- la figure 4 est une vue en perspective partielle du convoyeur sans fin de la figure 1,
- la figure 5 est une vue analogue à la figure 1 selon un second mode de réalisation, avec un moule continu,
- la figure 6 est une vue en perspective partiellement tronquée du convoyeur sans fin de la figure 5,
- la figure 7 illustre une vue détaillée du raccordement bout à bout pour fermer la bande convoyeuse,
- la figure 8 illustre une vue détaillée de la section du moule en version continue, avec sa déformation en zone de retournement.

### DESCRIPTION DETAILLEE

Sur les différentes figures, les mêmes références désignent des éléments identiques ou similaires. Pour des raisons de clarté de l'exposé, certains éléments peuvent ne pas être représentés à l'échelle.

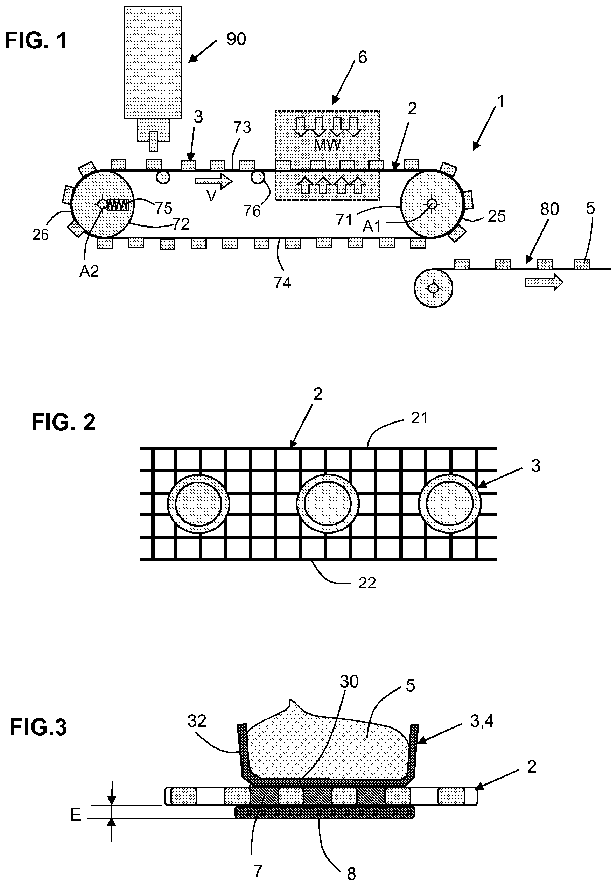

Sur la figure 1, un convoyeur **1** reçoit un produit **5** déposé par un équipement de dépose **90** et fait transiter ce produit à l'intérieur d'un équipement de type four à micro-ondes repéré par la référence **6.**

Selon le premier mode de réalisation, l'équipement de dépose **90** dépose séquentiellement des quantités discrètes de produit dans des moules **3,** c'est-à-dire plus précisément l'équipement de dépose **90** délivre une quantité prédéterminée de produit dans un moule **3** et puis recommence l'opération pour le moule suivant et ainsi de suite.

Le produit en question se présente sous forme liquide ou pâteuse, il n'est pas forcément homogène, il peut contenir des grumeaux.

Selon une option, la délivrance du produit s'accompagne d'une expansion par abaissement brusque de la pression comme ceci est décrit dans la demande de brevet WO2016110513. Dans ces conditions, le produit présente des alvéoles emplies du gaz utilisé pour la mise en pression antérieure.

Le produit peut donc être un produit alimentaire de type génoise c'est-à-dire un produit alimentaire alvéolé dont la structure et la texture va être figée par le passage dans le four à micro-ondes.

Comme déjà indiqué plus haut, le produit en question peut aussi être produit non alimentaire.

Le convoyeur **1** est un convoyeur du type sans fin qui comprend une bande convoyeuse **2** entraînée et guidée par des rouleaux **71,72.** On peut aussi appeler le bande convoyeuse **2** la '*bande porteuse*' ou '*tapis roulant*' du convoyeur. La bande convoyeuse **2** forme une boucle continue avec un brin aller **73,** un retournement **25** sur le premier rouleau **71,** un brin retour **74** et un autre retournement **26** sur le deuxième rouleau **72** pour fermer la boucle. Dans l'exemple illustré, le premier rouleau est un rouleau entraîneur d'axe **A1,** le deuxième rouleau est un rouleau suiveur de guidage d'axe **A2** monté sur un système à ressort **75** pour maintenir une tension suffisante dans la bande convoyeuse quelles que soient les conditions opérationnelles. Bien entendu, il peut aussi avoir plusieurs petits rouleaux de soutien **76,** motorisés ou non, notamment sous le brin supérieur (ici brin aller).

Le convoyeur **1** comprend des moules de réception **3** de produit. Chaque moule de réception **3** est destiné à recevoir une quantité prédéterminée de produit et, après le passage dans le four à micro-ondes, à décharger ce produit alors structuré sur un convoyeur auxiliaire de sortie repérée **80.**

La vitesse d'avance **V** de la bande convoyeuse peut être comprise entre 1cm/s et 50cm/s, le plus souvent, elle sera comprise entre 5cm/s et 25cm/s.

Il est avantageusement prévu un système de repérage et/ou d'indexage mécanique ou électromécanique (non représentés aux figures) pour permettre à l'équipement de dépose 90 de déposer le produit au moment adéquat lors du passage du moule.

La bande convoyeuse est formée en matière polymère renforcée de fibres. On choisit de préférence des fibres de verre. Des fibres de Téflon™ peuvent être choisies en alternative. On obtient ainsi une bonne rigidité en traction dans le plan de la bande, le module d'élasticité est suffisamment élevé pour qu'un petit rattrapage de tension par le système à ressort **75** soit suffisant pour garantir tout le temps une bonne tension dans la boucle de la bande convoyeuse.

La flexibilité dans le sens transversal au plan de la bande est suffisante pour passer les zones de retournement au niveau des rouleaux.

Par ailleurs, les polymères renforcés de fibres présentent une bonne transparence aux ondes micro-ondes.

Pour la matière polymère, on pourra choisir un Téflon™, c'est-à-dire un matériau de la famille des tétra-fluoro-éthylènes. En alternative, il n'est pas exclu d'utiliser une résine à base de polyamide, de polyéthylène, de polypropylène, de polyuréthane ou d'autres polymères équivalents.

Selon une solution, comme illustré à la figure 2, la bande convoyeuse se présente comme bande maillée ajourée. La flexibilité transversale s'en trouve améliorée et de plus il est possible de ventiler les moules avec les produits pour les refroidir à la sortie du four micro-ondes, le flux d'air passant au travers de la maille ajourée de la bande convoyeuse.

La bande convoyeuse est formée comme une trame qui comprend des armatures longitudinales dont les bords extérieurs **21** et **22,** et des armatures transversales, avec les mailles rectangulaires ou carrées. La dimension des mailles est typiquement comprise entre 0,4 cm et 5 cm.

Chaque moule 3 se présente comme une cuvette évasée avec un fond **30** et une bordure de flanc **32** qui va en s'élargissant vers l'extérieur c'est-à-dire en s'éloignant du fond **30.** Les moules de réception 3 sont formés en matière biocompatible.

Selon un exemple d'intérêt, les moules de réception **3** sont formés en matière silicone c'est-à-dire de la famille des polysiloxanes. Une autre matière élastomère biocompatible convient aussi.

Le silicone présente une bonne flexibilité et une faible adhérence pour le démoulage ; la flexibilité est aussi mise à profit pour subir des déformations dans les zones de retournement de la bande convoyeuse.

Les moules de réception **3** sont fixés à la bande convoyeuse **2.**

Comme illustré à la figure 3, il est prévu d'utiliser les orifices du réseau maillé de la bande convoyeuse pour y couler une colle **7** à base de silicone qui va adhérer intimement au moule et qui va recouvrir la bande convoyeuse du côté opposé au moule. Autrement dit, la bande convoyeuse 2 est prise en sandwich entre deux zones de matériau silicone. La compatibilité des matières garantit une bonne adhérence entre le silicone du moule et le silicone rapporté pour la fixation. La colle une fois prise forme une quasi soudure chimique avec le moule.

Il n'est pas exclu de former en une seule opération le moule et sa fixation directement sur la maille de la bande convoyeuse.

Selon une option, il est prévu d'utiliser une contre-pièce autrement appelée contrepartie **8** fixée sur la colle à base de silicone. La contrepartie **8** est placée du côté opposé de la bande convoyeuse 2 par rapport au moule 3. Autrement dit, la bande convoyeuse 2 est prise en sandwich entre le moule 3 et la contrepartie 8, le tout étant collé voire soudé chimiquement par la colle rapportée 7.

Avantageusement, la contrepartie 8 présente une épaisseur de dépassement E très faible, inférieure à 2 mm, et de préférence inférieure à 1 mm. Moyennant quoi, le passage du convoyeur sans fin sur les rouleaux **71,72** se fait quasiment à plat la surépaisseur formé par la contrepartie **8** ne fait quasiment pas bomber la bande convoyage au passage sur les rouleaux.

Le matériau de type colle silicone **7** inséré pour la fixation est de préférence un silicone thermo activable, qui une fois pris, supporte des températures jusqu'à 120°C voire 150°C sans se ramollir ni sans fondre.

La contre pièce **8** peut se présenter comme une galette de taille voisine du fond **30** du moule.

La contre pièce **8** n'est pas nécessairement en silicone, elle pourrait être en matière plastique compatible alimentaire plus rigide que le silicone.

Il faut remarquer que, dans le four micro-onde, la température de la bande convoyeuse n'atteint pas la température atteinte par le produit lui-même. On note que, dans le four micro-onde, la température pic du silicone des moules 3 est plus basse d'au moins 5°C que la température pic du produit 5, et que la température pic du polymère de la bande convoyeuse est plus basse d'au moins 30°C que la température pic du produit 5. De plus, la ventilation de la bande convoyeuse à la sortie du four micro-onde abaisse rapidement la température du polymère de la bande convoyeuse vers la température ambiante.

Avantageusement, à la fois les moules de réception **3** et la bande convoyeuse **2** sont fabriqués en matière transparente aux radiations micro-ondes **MW.** Ainsi lorsque les moules emplis de produit **5** passent au travers d'un four à micro-ondes **6,** le produit est réchauffé à cœur de manière homogène, typiquement dans une gamme de température comprise entre 80°C et 150°C selon l'application.

Par ailleurs, une très bonne transparence des moules **3** aux radiations micro-ondes procure l'avantage d'éviter tout phénomène d'emballement. En effet, les passages répétés d'un moule, même partiellement transparent dans le domaine micro-ondes, fixé sur un convoyeur sans fin au travers un four à micro-ondes peuvent entrainer l'apparition de points chauds locaux au sein de la matière constituant le moule. Ces points chauds peuvent modifier les propriétés physico-chimiques de la matière constituant le moule, et donc altérer son bon fonctionnement lors de ses futurs passages au travers le four à micro-ondes, et lors du démoulage par exemple.

Le four à micro-ondes **6** contient des magnétrons connus en soi et donc non détaillés ici, pour créer un champ électromagnétique de micro-ondes destiné à exciter les molécules d'eau comprise dans le produit **5.**

En outre, les fréquences de fonctionnement du four à micro-ondes **6** sont de 915 MHz et/ou 2450 MHz. Plus particulièrement, la fréquence principale de fonctionnement du four à micro-ondes peut être choisie à 2450 MHz. Il faut comprendre que par « matière transparente aux radiations micro-ondes » on entend une matière qui est non réactive à la fréquence de fonctionnement choisie. On peut choisir par exemple une matière qui soit non réactive à toutes les ondes électromagnétiques dans la bande [900 MHz - 2500 MHz].

Un exemple d'équipement de dépose **90** est décrit dans la demande de brevet FR1657038.

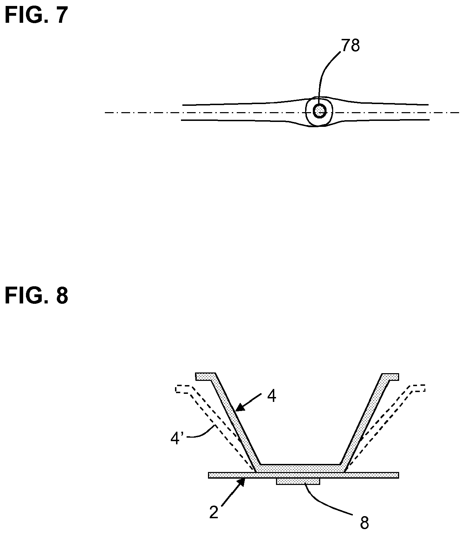

Pour former une bande convoyeuse sans fin, deux extrémités de la bande convoyeuse sont raboutées au moyen d'une clavette **78** (Fig. 7). Ladite clavette 78 traverse des orifices transversaux de part et d'autre comme une charnière. Ladite clavette 78 peut être formée en plastique rigide tel que ABS, PVC ou autre.

Selon un deuxième mode de réalisation, la bande convoyeuse porte un moule continu **4.** La section est constante tout le long du moule. La section comprend un fond **40** et des flancs évasés **41.** Pour former un moule sans fin, deux extrémités de la bande convoyeuse deux extrémités sont raboutées par thermo-soudage.

Le moule continu **4** se présente comme une goulotte sans fin.

Avantageusement, selon une option la section est évasée et permet un démoulage aisée, ceci d'autant plus que, comme illustré à la figure 8, le moule 4 a tendance à s'ouvrir aux extrémités du convoyeur, c'est-à-dire dans les zones de retournement **45,46** de la bande convoyeuse. La section s'aplatit et l'angle de dépouille s'accroit dans le virage de demi-tour.

Il faut remarquer que dans le cas de moules discrets, le déchargement des produits passait au four micro-ondes pourrait être fait par un bras manipulateur ou un autre moyen que le déversement sur un autre convoyeur décrit plus haut.

Il faut remarquer que la maille ajourée de la bande convoyeuse 2 permet un nettoyage aisé par le dessus et par le dessous des moules 3, notamment dans les parties extérieures ; en particulier l'accès par le dessous de la bande convoyeuse 2facilite le nettoyage de la base du moule 3.

## Revendications

1. Convoyeur (1) sans fin comprenant une bande convoyeuse (2) entraînée et guidée par des rouleaux, et comprenant un ou plusieurs moules de réception (3;4) de produit sous forme liquide ou pâteuse,
**caractérisé en ce que** le ou les moules de réception sont fixés à la bande convoyeuse, et, à la fois les moules de réception et la bande convoyeuse sont fabriqués en matière transparente aux radiations micro-ondes, de sorte que les moules en matière biocompatible emplis de produit (5) peuvent être passés au travers d'un four à micro-ondes (6), le produit étant réchauffé à cœur de manière homogène.

2. Convoyeur selon la revendication 1, dans lequel la bande convoyeuse se présente comme bande maillée ajourée.

3. Convoyeur selon l'une des revendications 1 à 2, dans lequel la bande convoyeuse est formée en matière polymère renforcée de fibres de verre ou de fibre de téflon.

4. Convoyeur selon l'une des revendications 1 à 3, dans lequel le ou les moules de réception sont formés en matière élastomère.

5. Convoyeur selon l'une des revendications 1 à 4, dans lequel le ou les moules de réception sont formés en matière silicone.

6. Convoyeur selon la revendication 5, dans lequel la fixation entre moules et bande convoyeuse est réalisée par apport de colle (7) en matière identique ou similaire à la matière du moule, à savoir une matière silicone ou élastomère biocompatible.

7. Convoyeur selon la revendication 6, dans lequel il est prévu l'utilisation d'une contrepartie (8) placée du côté opposé de la bande convoyeuse par rapport au moule, lequel la contrepartie étant formée en silicone ou élastomère biocompatible, et la contrepartie étant fixée par ledit apport de colle.

8. Convoyeur selon l'une des revendications 1 à 7, dans lequel il est prévu une pluralité de moules discrets (3), présentant une forme évasée en s'éloignant de la bande convoyeuse pour permettre un démoulage aisé.

9. Convoyeur selon l'une des revendications 1 à 6, dans lequel il est prévu un moule unique (4) de longueur substantiellement égale à la longueur de la bande convoyeuse.

10. Convoyeur selon l'une des revendications 1 à 8, dans lequel deux extrémités de la bande convoyeuse sont raboutées au moyen d'une clavette pour former une bande continue.

11. Chaîne de préparation d'un produit alimentaire ou non alimentaire, **caractérisé en ce qu'**elle comprend un convoyeur (1) selon l'une des revendications précédentes.

## Patentansprüche

1. Endlosförderer (1), umfassend ein Förderband (2), das durch Rollen angetrieben und geführt wird, und umfassend einen oder mehrere Aufnahmeformen (3; 4) für ein flüssiges oder pastöses Produkt,
**dadurch gekennzeichnet, dass** die Aufnahmeformen an dem Förderband befestigt sind und sowohl die Aufnahmeformen als auch das Förderband aus einem für Mikrowellenstrahlung durchlässigen Material bestehen, so dass die mit dem Produkt (5) gefüllten Formen aus biokompatiblem Material durch einen Mikrowellenofen (6) geführt werden können, wobei das Produkt homogen durcherhitzt wird.

2. Förderer nach Anspruch 1, wobei sich das Förderband maschenartig durchbrochen präsentiert.

3. Förderer nach einem der Ansprüche 1 bis 2, wobei das Förderband aus glasfaser- oder teflonfaserverstärktem Polymermaterial gebildet ist.

4. Förderer nach einem der Ansprüche 1 bis 3, wobei die eine oder die mehreren Aufnahmeformen aus elastomerem Material gebildet sind.

5. Förderer nach einem der Ansprüche 1 bis 4, wobei die eine oder die mehreren Aufnahmeformen aus Silikonmaterial gebildet sind.

6. Förderer nach Anspruch 5, wobei die Befestigung zwischen den Formen und dem Förderband durch Aufbringen von Klebstoff (7) aus demselben oder einem ähnlichen Material wie das Formmaterial, nämlich einem biokompatiblen Silikon- oder Elastomermaterial, erfolgt.

7. Förderer nach Anspruch 6, wobei die Verwendung eines Gegenstücks (8) vorgesehen ist, das auf der der Form gegenüberliegenden Seite des Förderbandes angeordnet ist, wobei das Gegenstück aus Silikon oder biokompatiblem Elastomer gebildet ist und das Gegenstück durch die Zufuhr von Klebstoff befestigt ist.

8. Förderer nach einem der Ansprüche 1 bis 7, wobei eine Mehrzahl von einzelnen Formen (3) vorgesehen ist, die eine vom Förderband weg aufgeweitete Form aufweisen, um ein einfaches Entformen zu ermöglichen.

9. Förderer nach einem der Ansprüche 1 bis 6, wobei eine einzelne Form (4) vorgesehen ist, deren Länge im Wesentlichen der Länge des Förderbandes entspricht.

10. Förderer nach einem der Ansprüche 1 bis 8, wobei zwei Enden des Förderbandes mittels einer Passfeder miteinander verbunden sind, um ein Endlosband zu bilden.

11. Fertigungslinie zur Zubereitung eines Nahrungsmittel- oder Nicht-Nahrungsmittelprodukts, **dadurch gekennzeichnet, dass** sie einen Förderer (1) nach einem der vorhergehenden Ansprüche umfasst.

## Claims

1. An endless conveyor (1) comprising a conveyor belt (2) driven and guided by rollers, and comprising one or more receiving moulds (3; 4) of product in liquid or paste form, **characterised in that** the receiving mould(s) are fastened to the conveyor belt, and both the receiving moulds and the conveyor belt are made of a material which is transparent to microwave radiation, such that the moulds made of biocompatible material filled with product (5) can be passed through a microwave oven (6), the product being fully reheated in a homogeneous manner.

2. The conveyor according to claim 1, wherein the conveyor belt is in the form of a perforated mesh belt.

3. The conveyor according to one of claims 1 to 2, wherein the conveyor belt is formed of polymer material reinforced with glass fibre or with Teflon fibre.

4. The conveyor according to one of claims 1 to 3, wherein the receiving mould(s) are formed of elastomeric material.

5. The conveyor according to one of claims 1 to 4, wherein the receiving mould(s) are formed of silicone material.

6. The conveyor according to claim 5, wherein the fastening between moulds and conveyor belt is carried out by supplying glue (7) of a material identical or similar to the material of the mould, namely a silicone material or biocompatible elastomer.

7. The conveyor according to claim 6, wherein the use of a counterpart (8) placed on the opposite side of the conveyor belt relative to the mould is provided, which counterpart being formed of silicone or biocompatible elastomer, and the counterpart being fastened by said glue supply.

8. The conveyor according to one of claims 1 to 7, wherein a plurality of discrete moulds (3) are provided, having a flared shape away from the conveyor belt to allow an easy demoulding.

9. The conveyor according to one of claims 1 to 6, wherein a single mould (4) of length substantially equal to the length of the conveyor belt is provided.

10. The conveyor according to one of claims 1 to 8, wherein two ends of the conveyor belt are butt-joined by means of a key to form a continuous belt.

11. A production line for preparing a food or non-food product, **characterised in that** it comprises a conveyor (1) according to one of the preceding claims.
